# EUROPEAN PATENT APPLICATION

(11) **EP 0 965 941 A2**
(43) Date of publication of application: **22.12.1999**
(21) Application number: 99304856.0
(22) Date of filing: 21.06.1999
(51) Int. Cl.: G06K 7/00

(54) **Electronic banking device**

(30) Priority: 14.09.1998 GB 9819935; 19.06.1998 GB 9813155
(71) Applicant: NCR INTERNATIONAL INC., Dayton, Ohio 45479 (US)
(72) Inventor: Emmott, Stephen J., Gatliff Road, London SW1W 8QR (GB); Johnson, Graham I., Tayport, Fife DD6 9AA (GB); Woods, Sarah, London SE1 9JL (GB)
(74) Representative: Cleary, Fidelma

(57) **Abstract**

An electronic banking device to be carried on the person of a user comprises a holder (10) which may be flexible so that the holder resembles a wallet or purse. The holder accommodates a number of components enabling the user to make monetary transactions. The components accommodated by the holder include receptacles (20) for smart cards (19), a smart card reader, an interactive display device including a touch screen (14), a mobile electronic data communications facility, and a transaction processing means (12,16) in data communication with the smart card reader, the display device and the data communications facility. The display device is user operable to communicate financial transaction instructions to the transaction processing means (12) which is programmed to respond to the instructions to effect financial transfers between the smart card reader and the data communications facility.

## Description

The present invention relates to an electronic banking device to be carried on the person of a user. The banking device comprises a holder which accommodates a number of components enabling the user to make monetary transactions.

The wallet or purse is the traditional and familiar means to hold cash and other everyday objects about the person. Other devices such as credit cards, smart cards and tokens have broadened the range of personal financial transactions so that a choice can be made to transact purchases and make other financial transactions either with cash held in the wallet or purse or electronically through retail point-of-sale terminals or automated teller machines. An even wider range of transactions has become commonplace through the advent of telephone banking whereby telephone or personal computer instructions to the relevant institution can be communicated for financial transfers and the purchase of services.

The variety of means to manage money has thus expanded so that the individual user is faced with a mass of different, often technologically complex devices and interfaces for communication and transaction in different contexts such as within the home, on the move or at work. The user is also faced with an increasing diversity of information from advertisers, banks and retailers which may affect the management of financial affairs.

It is an aim of the present invention to provide an electronic banking device, to be carried on the person, which provides the user with the personal means to complete electronic financial transactions through an electronic communications facility without recourse to a plurality of separate technical devices.

From one aspect, the invention consists in a portable device characterised by an antenna and means for causing the antenna to transmit signals which are effective to cause an ATM to execute a transaction.

From another aspect, the invention consists in a portable device characterised by identification means for verifying the identity of a person adjacent the device and transaction means effective to undertake a transaction with an ATM.

From yet another aspect, the invention consists in a system characterised by an ATM, and a portable interface, physically separate from the ATM, for transmitting signals to the ATM which instruct the ATM to dispense currency.

From still another aspect, the invention consists in a method of communicating with an ATM characterised by the steps of verifying the identity of a person having custody of a portable terminal and, after verification, causing the terminal to transmit signals to the ATM, which cause the ATM to undertake a financial transaction.

From a further aspect, the invention consists in a method of operating a portable device, characterised by the steps of placing the portable device near an ATM, using the portable device, transmitting a message to an INTERNET, for relay to the ATM, performing a transaction with the ATM using the portable device, and transmitting a signal to the INTERNET, for relay to the ATM, which message terminates the transaction.

The invention may be embodied in an electronic banking device to be carried on the person of a user. Such a banking device may comprise a holder accommodating a receptacle for at least one smart card, a smart card reader, an interactive display device including a touch screen, a mobile electronic data communications facility, and a transaction processing means in data communication with the smart card reader, the display device and the data communications facility. The display device is user operable to communicate financial transaction instructions to the transaction processing means, and the data transaction processing means is programmed to respond to the instructions to effect financial transfers between the smart card reader and the data communications facility. The holder may be in the form of a wallet which is openable to provide access to the smart card reader, the touch screen and the mobile communications facility.

The invention will now be described, by way of example, with reference to the accompanying drawings in which;
Figure 1 represents a wallet incorporating the present invention and shown in a closed position,
Figure 2 represents the wallet of Figure 1 shown in an open position,
Figure 3 is a block diagram of an electronic network including a network site constituted by the wallet of Figures 1 and 2, and
Figure 4 shows a block circuit diagram of components accommodated within the wallet of Figures 1 and 2.

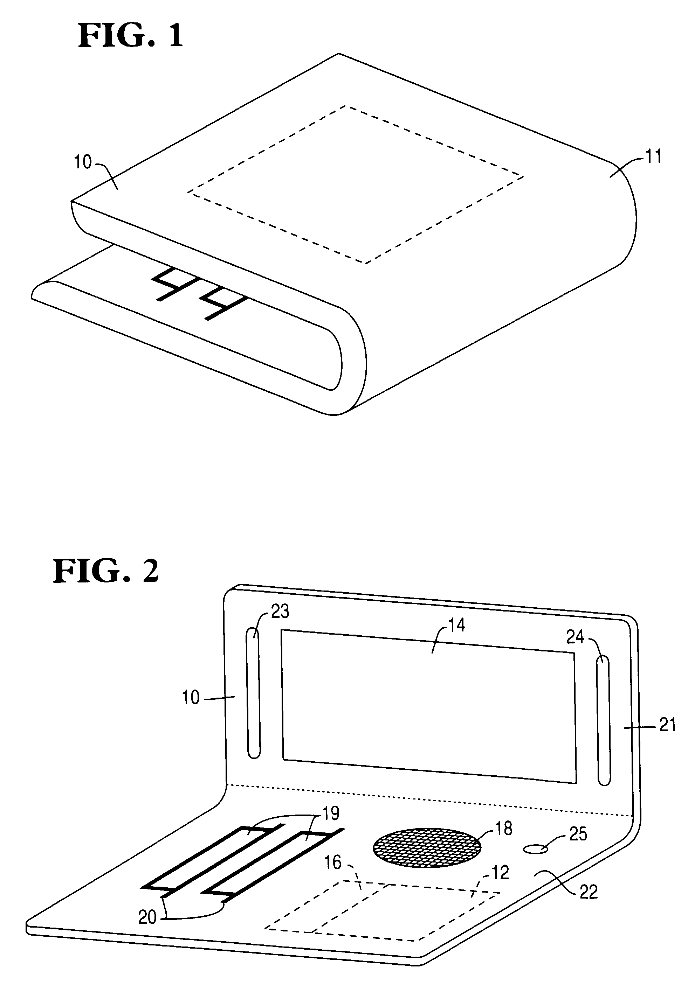

Referring to Figures 1 and 2 of the accompanying drawings, there is shown a wallet 10 comprising a flexible leather or fabric outer casing 11. The casing is folded over as shown in Figure 1 when not in use so that the wallet can be conveniently carried on the person of the user. The wallet 10 is unfolded as shown in Figure 2 to allow physical access to a number of items accommodated within the wallet. Other functional items, as will be explained, are accommodated within the interior depth of the casing and remain out of sight of the user even when the wallet 10 is unfolded.

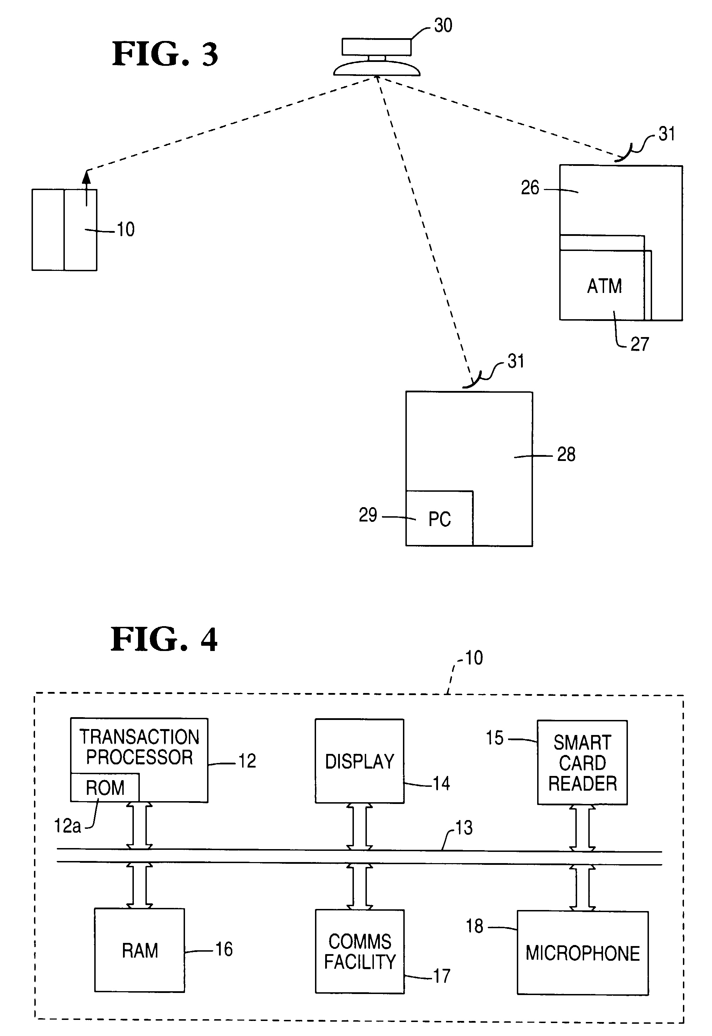

Referring to Figure 4, the wallet 10 is represented diagrammatically by an outer, dotted line rectangle. The wallet accommodates a transaction processor 12, incorporating a read-only memory 12a. The transaction processor is connected to a data bus 13. A liquid crystal touch screen display 14, a smart card reader 15, a random access memory 16, an electronic mobile communications facility 17 and a microphone 18 are also connected to the data bus 13.

As seen in Figure 2, the wallet 10 accommodates a number of smart cards 19 which can be placed by the user within storage pockets 20 in the wallet casing. The pockets 20 may number 2 as shown in Figure 2 or any other convenient number greater than 2.

The liquid crystal display 14 is seen in Figure 2 to be mounted on the inner face of the flap 21 of the wallet to be visible to the user. The microphone 18 is mounted in the flap 22 of the wallet to be accessible to the voice of the user. The processor 12 and the smart card reader 15, the memory 16 and the communications facility 17 are all disposed within the interior depth of the wallet casing. The transaction processor 12 and memory 16 are shown diagrammatically by dotted lines in Figure 2 as disposed interiorly of the flap 22 of the wallet 10. The card reader 15 is disposed behind the display 14 in the flap 21 of the wallet but has a card receiving slot 23 which is positioned alongside the screen 14. The slot 23 is provided in the smart card reader to receive one of the smart cards 19 taken from its storage pocket 20.

The communications facility 17 is also disposed within the flap 21 of the wallet behind the display screen 14. An extensible aerial 24 forming part of the communications facility 17 is however arranged for access by the user. A user recognition device 25 is provided to control the powering on of the components shown in Figure 4.

In Figure 3, the wallet 10 is shown in operation as one site of an electronic communications network. Other sites include a banking building 26 including an automatic teller machine 27 and a building 28 including a personal computer 29. The communications network is shown diagrammatically to include a satellite 30 which provides a link to satellite dishes 31 provided on the buildings 26 and 28. It will be understood by those skilled in the art of electronic communications that the network is capable of transmitting data to be relayed over the public switched networks with additional links to the internet for e-mail communications.

In operation, a user can open the wallet 10 to gain access to the user recognition device 25. The recognition device is a biometrics device which operates by reference to an image of the iris of the authorized user. The authorized image is stored by the transaction processor. When an attempt is made to use the wallet, a comparison is made between the stored image and the iris of the user attempting to use the wallet. If there is a match between the iris of the user and the stored image, the transaction processor 12 is enabled and a message informing the user of this is displayed on the display screen 14. If there is no match, the transaction processor 12 is shut down.

It will be apparent to those skilled in the art that the biometrics recognition device 25 may take a form other than an iris recognition device. One such alternative form is a biometrics recognition device in which recognition is made of the fingerprint of the authorized user.

Upon recognition of the user, the transaction processor 12 is programmed by means of programs stored in the ROM 12a to display to the user a menu of options on the screen 14. The options enable mobile electronic banking and communication, electronic commerce, and computing operations as will be explained.

In a first option, the user may select a banking operation which involves the use of one of the smart cards 19 selected from its storage pocket 20. The user is instructed through the display 14 to insert the smart card 19 into the slot 23 of the smart card reader 15. The smart card reader 15 communicates via the data bus 13 with the transaction processor 12 to signal the insertion of the chosen smart card 19 and to transfer data from the smart card to the RAM 16 under the control of the transaction processor 12. The data in the RAM 16 includes encrypted information which is accessed by the transaction processor 12 and subject to decryption by means of a decryption program stored in the ROM 12a. The decrypted information may include financial information such as the balance of currency stored in the smart card. The financial information is displayed to the user on the screen 14 so that the user may be informed of the balance stored on the smart card.

In the event that the user chooses to increase the balance of currency stored on the smart card 19, the user may opt to select this option from the display on the screen 14. The option is selected by touching the screen at the location where that option is displayed. The selection of the option is communicated via the data bus 13 to the transaction processor 12 which is programmed to send data to activate the mobile communications facility 17. The communications facility 17 is activated to communicate an encrypted message over the network illustrated in Figure 3. The message may be addressed, for example to an ATM 27, to dispense currency of a value selected from the touch screen by the user. The ATM 27 dispenses the requested currency value by sending a return encrypted message to the facility 17 for entry into the RAM 16 under the control of the transaction processor 12. The value of any dispensed currency is deducted by the ATM 27 from the balance of an account held by the user of the wallet 10. The dispensed currency is communicated from the RAM 16 to the smart card reader 15 via the data bus 13 to be entered into the smart card 19.

From the above explanation, it will be seen that the wallet 10 can be used as a digital wallet in which the currency value stored in one or more of the smart cards 19 can be increased because the display device 14 is user operable to communicate financial transaction instructions to the transaction processing means 12, and the data transaction processing means 12 is programmed to respond to the user instructions to effect financial transfers between the smart card reader 15 and the data communications facility 17.

The cash stored electronically in the smart cards 19 can be used to make purchases electronically. In this case, the user may choose an option from the touch screen 14 to make a purchase using the card 19 entered into the card reader 15. The display screen 14 communicates this option to the transaction processor 12 which thereupon instructs the user to enter the data relevant to the purchase. The purchase is communicated electronically by way of the communications facility 17 over the network to the retailer or service provider from whom the purchase is being made. A return message from the retailer or service provider acknowledging the purchase is entered into the RAM 16 and the transaction processor 12 responds to this return message by sending data via the bus 13 to the smart card reader 15 to deduct the purchase amount from the smart card 19 in the reader 15.

It will be apparent that the number of devices that are connected to the data bus 13 may be increased beyond those described and illustrated in the accompanying Figures. For example, the wallet 10 may have more than one smart card reader so as to provide a wider facility to effect financial transactions. Such transactions may include transfers from one smart card reader to another so as to manipulate the transfer of cash from one card to another.

The microphone 18 is provided to widen the communication capability of the wallet 10. The microphone incorporates an analog to digital conversion circuit so as to enable digital information representing speech to pass via the data bus 13 to the transaction processor 12. The transaction processor 12 has a speech recognition program capable of converting the microphone input into a text output for display on the screen 14 and for communication to the communications facility 17. The user may select an option from the screen 14 to compose a message to be sent via the communications facility 17. The message may, for example consist of a paging message or may be an e-mail message. The selection of the message option through the touch screen 14 is communicated to the transaction processor 12 via the data bus 13. In response the transaction processor requests the user, via the screen 14, to enter the message through the microphone 18. The transaction processor 12 receives the digital form of the message via the data bus 13 and is programmed to store the message in the RAM 16. The transaction processor converts the digital data in the RAM 16 to text data which is supplied by way of the bus 13 to be displayed on the screen 14. The user is requested to confirm or cancel the displayed message. If the message is confirmed, the transaction processor 12 controls the communication facility 17 to receive the text data from the bus 13 and to transmit the message over the appropriate mobile communications network.

The messages transmitted from the wallet may be to request information from information servers, which information is to be displayed on the screen 14 or to be downloaded onto a smart card 19. The downloaded information may, for example, be of sporting results, financial share information, music or any other material which can conveniently be transmitted and received for storage in a smart card. Intelligent agent programs may be stored by the transaction processor 12 or accessed by a request message transmitted from the wallet 10 by the user. Such intelligent agent programs may be used to search for material to be transmitted back to the wallet or may be used to filter material which is transmitted back to the wallet.
to search for material to be transmitted back to the wallet or may be used to filter material which is transmitted back to the wallet.

What has been described is a banking device which can conveniently be carried by the user and can be formed in the same manner as the already familiar wallet. Alternatively, the device could be shaped to resemble a purse. The device is capable of stylistic versatility to make it an attractive fashion accessory whilst offering the user a comprchensive money management facility which includes the management of electronic financial transactions. It will be apparent that in the form of a wallet or purse, the device may be provided with storage for currency in the form of notes or coins.

## Claims

1. A portable device (10) characterised by an antenna (24) and means (17) for causing the antenna to transmit signals which are effective to cause an ATM (27) to execute a transaction.

2. A portable device according to claim 1, characterised by one or more pockets (20) for storing one or more smart cards (19).

3. A portable device according to claim 1 or 2, characterised by a reader (15) for reading smart cards.

4. A portable device according to claim 1, 2 or 3, characterised in that the signals are received by the ATM and travel on an INTERNET during their travel to the ATM.

5. A portable device according to claim 1, 2, 3 or 4, characterised by biometric verification means (12,25) for verifying the identity of a person based on an image taken from the person's physiology.

6. A portable device (10) characterised by identification means (25) for verifying the identity of a person adjacent the device and transaction means (12,17) effective to undertake a transaction with an ATM (27).

7. A portable device according to claim 6, characterised in that the identification means comprises a biometric identification means (12,25) for deriving a first image of part of a person's physiology, comparing the first image with a second image, and blocking the financial transaction if the first and second images fail to match.

8. A portable device according to claim 5 or 7, characterised in that the biometric identification means derives an image of the person's eye or the person's fingerprint.

9. A portable device according to claim 7, characterised by storage means (20) for storing one or more wallet-sized cards (19), and reader means (15) for accepting a card and deriving data from the card.

10. A portable device according to claim 9, characterised in that the reader means (15) is effective to read data from smart cards (19).

11. A portable device according to claim 2 or 9, characterised in that the or each pocket or the storage means (20) is effective to store tokens.

12. A portable device according to claim 3 or 9, characterised in that the reader is effective to read data from tokens.

13. A system characterised by an ATM (27), and a portable interface (10), physically separate from the ATM, for transmitting signals to the ATM which instruct the ATM to dispense currency.

14. System according to claim 13, characterised in that the interface comprises a stored token.

15. A method of communicating with an ATM (27) characterised by the steps of verifying the idcntity of a person having custody of a portable terminal (10) and, after verification, causing the terminal to transmit signals to the ATM, which cause the ATM to undertake a financial transaction.

16. Method according to claim 15, characterised in that the terminal (10) obtains data from a card (19) presented to it, and the ATM (27) receives at least some of the data.

17. Method according to claim 15 or 16, characterised in that the identity is verified by a process which includes the step of examining the person's eye or the person's fingerprint.

18. Method according to claim 15, 16 or 17, characterised in that the terminal (10) obtains data from a token presented to it, and the ATM (27) receives at least some of the data.

19. A method of operating a portable device, characterised by the steps of placing the portable device (10) near an ATM (27), using the portable device, transmitting a message to an INTERNET, for relay to the ATM, performing a transaction with the ATM using the portable device, and transmitting a signal to the INTERNET, for relay to the ATM, which message terminates the transaction.
